# EUROPÄISCHE PATENTANMELDUNG

(11) **EP 1 733 872 A1**
(43) Veröffentlichungstag der Anmeldung: **20.12.2006**
(21) Anmeldenummer: 05405383.0
(22) Anmeldetag: 15.06.2005
(51) Int. Cl.: B32B 27/18, B32B 15/08, B65D 81/26, B65D 75/36, A61J 1/03

(54) **Kaltverformbares Laminat**

(71) Anmelder: Alcan Technology & Management Ltd., 8212 Neuhausen am Rheinfall (CH)
(72) Erfinder: Hombach, Franz Peter, CH-8222 Beriingen (CH); Nägeli, Hans-Rudolf, CH-8212 Neuhausen (CH); Pasbrig, Erwin, D-78224 Singen (DE); Brandl, Oliver, D-78462 Konstanz (DE); Schwarz, Thomas, D-78244 Gottmadingen (DE)

(57) **Zusammenfassung**

Ein kaltverformbares Laminat (10) für die Herstellung von Blistern (70) zur Verpackung von gegen Feuchte, Sauerstoff und Säure empfindlichen Produkten weist eine Sperrschicht (16) als Barriere gegen Wasserdampf und Gase, eine auf einer ersten Seite der Sperrschicht (16) angeordnete Kunststoffschicht (12) als Aussenschicht und eine auf der zweiten Seite der Sperrschicht (16) angeordnete siegelfähige Innenschicht (20, 21, 22) auf. Zur Erhöhung der Haltbarkeit ist auf der zweiten Seite der Sperrschicht (16) ein Feuchte, Sauerstoff und Säure absorbierendes Absorbermaterial (24) angeordnet.

## Beschreibung

Die Erfindung betrifft ein kaltverformbares Laminat für die Herstellung von Blistern zur Verpackung von gegen Feuchte, Sauerstoff und Säure empfindlichen Produkten, mit einer Sperrschicht als Barriere gegen Wasserdampf und Gase, einer auf einer ersten Seite der Sperrschicht angeordneten Kunststoffschicht als Aussenschicht und einer auf der zweiten Seite der Sperrschicht angeordneten siegelfähigen Innenschicht. Weiter betrifft die Erfindung eine Deckfolie für aus dem kaltverformbaren Laminat hergestellte Blister, wobei die Deckfolie eine Sperrschicht als Barriere gegen Wasserdampf und Gase und eine auf einer ersten Seite der Sperrschicht angeordnete siegelfähige Innenschicht. Im Rahmen der Erfindung liegen auch ein aus dem Laminat hergestellter Blister und eine Blisterpackung mit einer gegen die Innenschicht des Laminates auf den Blister gesiegelten Deckfolie.

Es ist allgemein bekannt, gegen Feuchtigkeit und Sauerstoff empfindliche Produkte durch Verpacken in Kunststoffmaterialien vor schädlichen atmosphärischen Einflüssen zu schützen. Feuchteempfindliche Produkte können beispielsweise mit einem für Wassermoleküle praktisch undurchlässigen Kunststofffilm umhüllt werden. Als Barriere gegen den Durchtritt von Feuchtigkeit kann z.B. ein Film aus einem Polyethylen hoher Dichte (HDPE) oder aus einem Polyvinylidenchlorid-Methylacrylat-Copolymer (PVDC-MA) verwendet werden. Filme aus orientiertem Polypropylen (oPP), gegebenenfalls metallisiert, oder metallisierte Polyesterfilme, dienen ebenfalls als Barrierematerial gegen Feuchtigkeitsdurchtritt. Weiter sind Metallfolien als Barrierematerial gegen den Durchtritt von Feuchtigkeit und/oder Sauerstoff bekannt und werden oft im Verbund mit Kunststofffilmen eingesetzt. Eine gute Barrierewirkung gegen Wasserdampf und Gase kann auch mit einer Schicht aus Ethylen-Vinylalkohol-Copolymer (EVOH) erreicht werden.

Obschon heute Laminate mit Barriereschichten mit hoher Durchtrittssperrwirkung gegen Feuchtigkeit und Sauerstoff bekannt sind, kann der Durchtritt von Feuchtigkeit gerade bei gesiegelten Verpackungen nicht vollständig verhindert werden, da die Kanten der Laminaten durch die Barriereschicht nicht geschützt sind. Über diese ungeschützten Kanten im Bereich von Siegelungen kann Feuchtigkeit und Sauerstoff in das Innere heissgesiegelter Verpackungen eindringen und die Qualität feuchteempfindlicher Produkte beeinträchtigen.

Aus WO-A-2004/000541 und WO-A-2004/080808 sind mehrschichtige Filme mit einer Barriereschicht und mit einer Feuchte absorbierendes Material enthaltenden Siegelschicht bekannt. Die Filme dienen zur Verpackung feuchteempfindlicher Gegenstände, wie z.B. Diagnostik-Teststreifen, und werden entweder nach Faltung gegen sich selbst oder gegen einen zweiten Film heissgesiegelt. Als Feuchte absorbierendes Material mit starker Wasserbindung wird bevorzugt Kalziumoxid (CaO) eingesetzt.

Der Erfindung liegt die Aufgabe zugrunde, ein zur Herstellung von Blistern zur Verpackung von gegen Feuchte, Sauerstoff und Säure empfindlichen Produkten geeignetes kaltverformbares Laminat sowie eine Deckfolie der eingangs genannten Art zu schaffen, welche gegenüber Laminaten und Deckfolien nach dem Stand der Technik eine höhere Schutzwirkung gegen den Durchtritt von Feuchtigkeit, Sauerstoff und Säure aufweist.

Zur erfindungsgemässen Lösung der Aufgabe führt bezüglich des kaltverformbaren Laminates, dass auf der zweiten Seite der Sperrschicht ein Feuchte, Sauerstoff und Säure absorbierendes Absorbermaterial angeordnet ist.

Das erfindungsgemässe Laminat kann auf allen Abpackanlagen mit Kaltumformstationen eingesetzt werden und eignet sich für eine Vielzahl von feuchteempfindlichen Produkten, deren Haltbarkeit durch die spezielle Anordnung eines Feuchteabsorbers wesentlich erhöht werden kann.

Die Erfindung macht sich die an Verpackungsfolien und daraus hergestellten Verpackungen gemäss WO-A-2004/000541 und WO-A-2004/080808 gewonnenen Erkenntnisse zunutze.

Das Polyolefin der Innenschicht enthält bevorzugt wenigstens ein Oxid aus der Gruppe der Alkali- und Erdalkalimetalle als Absorbermaterial. Besonders bevorzugt ist Kalziumoxid (CaO) als Absorbermaterial. Neben seiner Eigenschaft als Wasser bindendes Reagens bietet CaO den zusätzlichen Vorteil, dass Säurebildner, wie z.B. Chlorionen oder organische Säuren, die von Produkten abgespalten werden, als Gase oder als durch Reaktion mit Wasser gebildet Säure mit dem CaO zum Salz reagieren und somit gebunden werden. Zudem hat sich gezeigt, dass CaO auch Sauerstoff zu absorbieren vermag, also die Eigenschaften eines Oxygen Scavangers aufweist.

Der bevorzugte Gehalt des Polyolefins der Innenschicht beträgt 0,5 bis 50 Gew.-% CaO, insbesondere 10 bis 30 Gew.-% CaO.

Das Polyolefin der Innenschicht besteht bevorzugt aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP). Es können auch Bestandteile säuremodifizierter Polyolefine, wie lonomere, z.B. Surlyn®, EAA oder PP-MSA enthalten sein. Diese säuremodifizierten Polyolefine wirken als Haftvermittler, so dass in gewissen Fällen auf einen separaten Primer verzichtet werden kann.

Das Polyolefin der Innenschicht kann aus einer einzigen Schicht oder aus mehreren Schichten bestehen.

Besonders bevorzugt ist ein Laminat, bei dem das Polyolefin der Innenschicht eine Coextrusionsschicht aus wenigstens zwei Schichten ist, wobei die äusserste, von der Aluminiumfolie am weitesten entfernte Schicht im wesentlichen kein CaO enthält. Mit dieser Massnahme wird eine glatte Oberfläche erzeugt, so dass der Reibungskoeffizient des erfindungsgemässen Laminates dem herkömmlicher Laminate entspricht. Durch das Fehlen der Zusatzstoffe wie CaO in der äussersten Schicht ergibt sich im Vergleich zu herkömmlichen Laminaten bei der Verarbeitung auch keine Abrasion an Formstempeln oder anderen Maschinenkomponenten.

Beim erfindungsgemässen Laminat ist die Sperrschicht vorzugsweise eine Aluminiumfolie und auf der dem Polyolefin zugewandten Seite bevorzugt mit einem Haftvermittler, insbesondere mit einem wasser- oder lösemittelbasierten Primer, oder mit einem polymeren Haftvermittler beschichtet.

Die Aussenschicht ist bevorzugt ein mit der Aluminiumfolie über eine Klebstoffschicht verbundener Kunststofffilm aus orientiertem Polyamid (oPA), orientiertem Polypropylen (oPP) oder orientiertem Polyester.

Zur erfindungsgemässen Lösung der Aufgabe führt bezüglich der Deckfolie, dass auf der ersten Seite der Sperrschicht, d.h. auf der Seite mit der siegelfähigen Innenschicht, ein Feuchte, Sauerstoff und Säure absorbierendes Absorbermaterial angeordnet ist.

Das Polyolefin der Innenschicht enthält bevorzugt wenigstens ein Oxid aus der Gruppe der Alkali- und Erdalkalimetalle als Absorbermaterial. Besonders bevorzugt ist Kalziumoxid (CaO) als Absorbermaterial.

Der bevorzugte Gehalt des Polyolefins der Innenschicht beträgt 0,5 bis 50 Gew.-% CaO, insbesondere 10 bis 30 Gew.-% CaO.

Das Polyolefin der Innenschicht besteht bevorzugt aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP) und/oder enthält Bestandteile säuremodifizierter Polyolefine, wie lonomere, EAA oder PP-MSA.

Das Polyolefin der Innenschicht besteht bevorzugt aus einer einzigen Schicht.

Die siegelfähige Innenschicht umfasst ein Siegelmedium in der Form eines Lackes, insbesondere eines Heisssiegellackes, einer Folie oder einer siegelfähigen Beschichtung und dient zur Siegelung der Deckfolie gegen die Innenseite des Blisters, wobei die Siegelung eine Festversiegelung oder eine Siegelung mit geringerer Haftkraft zur Bildung einer peelbaren Öffnung sein kann.

Die Sperrschicht ist bevorzugt eine Aluminiumfolie.

Zur Herstellung einer Blisterpackung zur Verpackung von gegen Feuchte, Sauerstoff und Säure empfindlichen Produkten wird aus dem erfindungsgemässen Laminat zunächst durch Kaltverformung ein Blister gefertigt. Nach dem Befüllen des Blisters wird anschliessend eine Deckfolie, die eine Sperrschicht als Barriere gegen Wasserdampf und Gase umfasst, gegen die Innenschicht des Laminates auf den Blister gesiegelt.

Die erfindungsgemässe Blisterpackung wird bevorzugt verwendet zum Verpacken von pharmazeutischen Produkten wie feuchteempfindlichen Tabletten und Pulvern.

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt schematisch in
- Fig. 1 den Schichtaufbau eines kaltverformbaren Laminates für die Herstellung von Blistern gemäss Fig. 5, entsprechend der Schnittlinie II-II von Fig. 5;
- Fig. 2 den Schichtaufbau einer durchdrückbaren Deckfolie für Blister gemäss Fig. 5, entsprechend der Schnittlinie III-III von Fig. 5;
- Fig. 3 den Schichtaufbau einer peelbaren Deckfolie für Blister;
- Fig. 4 die Draufsicht auf einen aus dem Laminat von Fig. 1 kaltgeformten Blister;
- Fig. 5 den Schnitt durch den Blister von Fig. 4 nach deren Linie I-I;
- Fig. 6 den Blister von Fig. 5 mit aufgesiegelter Durchdrückfolie von Fig. 2 bzw. einer peelbaren Deckfolie von Fig. 3.

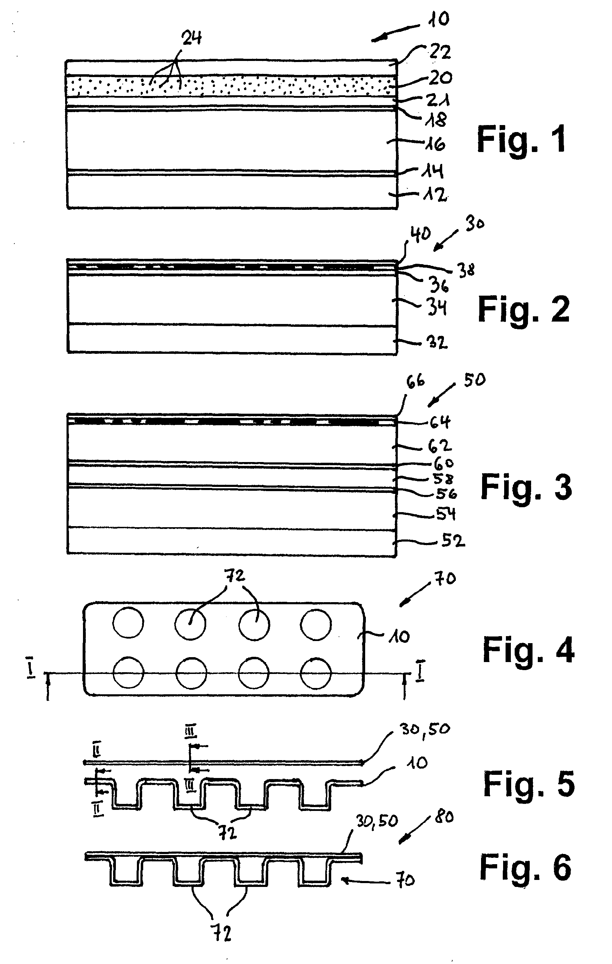

Ein kaltverformbares Laminat 10 für die Herstellung von Blistern zur Verpackung von feuchteempfindlichen Produkten weist gemäss Fig. 1 den folgenden Schichtaufbau auf:
- 12: Film aus orientiertem Polyamid (oPA), 25 µm
- 14: Klebstoffschicht
- 16: Aluminiumfolie, 45 µm
- 18: Haftvermittler (EAA),
- 21: erste Schicht aus Polyethylen hoher Dichte (HDPE), 7µm
- 20: zweite Schicht aus Polyethylen (PE), 45µm, mit
- 24: 30% CaO-Partikeln als Absorber von Feuchte, Sauerstoff und Säure
- 22: dritte Schicht aus Polyethylen hoher Dichte (HDPE), 7µm

Der oPA-Film 12 bildet die spätere Aussenseite eines aus dem Laminat 10 hergestellten Blisters, die PE-Schichten 20, 21, 22 bilden als Siegelschicht die Innenseite.

Eine als Durchdrückfolie ausgestaltete Deckfolie 30 für einen aus dem Laminat 10 hergestellten Blister weist gemäss Fig. 21 den folgenden Schichtaufbau auf:
- 32: Heisssiegellack oder Siegelbeschichtung
- 34: Aluminiumfolie
- 36: Druckvorlack
- 38: Bedruckung
- 40: Drucküberlack

Die Bedruckung 38 mit dem Drucküberlack bildet die spätere Aussenseite der Deckfolie 30, der Heisssiegellack bzw. die Siegelbeschichtung 32 dient der Siegelung der Deckfolie 30 gegen die Siegelschicht 22 eines aus dem Laminat 10 hergestellten Blisters. Die Deckfolie 30 kann optional eine zwischen Heisssiegellack bzw. Siegelbeschichtung 32 und Aluminiumfolie 34 angeordnete Absorberschicht mit CaO-Partikeln aufweisen.

Eine als peelbare Folie ausgestaltete Deckfolie 50 für einen aus dem Laminat 10 hergestellten Blister weist gemäss Fig. 3 den folgenden Schichtaufbau auf:
- 52: Heisssiegellack oder Siegelbeschichtung
- 54: Aluminiumfolie
- 56: Klebstoffschicht
- 58: Film aus Polyethylenterephthalat (PET)
- 60: Klebstoffschicht
- 62: Papier
- 64: Bedruckung
- 66: Drucküberlack

Die Bedruckung 64 mit dem Drucküberlack 66 bildet die spätere Aussenseite der peelbaren Deckfolie 50, der Heisssiegellack bzw. die Siegelbeschichtung 52 dient der Siegelung der Deckfolie 50 gegen die PE-Schicht 22 eines aus dem Laminat 10 hergestellten Blisters. Die Deckfolie 50 kann optional eine zwischen Heisssiegellack bzw. Siegelbeschichtung 52 und Aluminiumfolie 54 angeordnete Absorberschicht mit CaO-Partikeln aufweisen.

Ein in Fig. 4 gezeigter Blister 70 wird aus dem Laminat 10 hergestellt, wobei die aus dem Laminat 10 herausgeformten Näpfe 72 zu Aufnahme von beispielsweise Tabletten durch Kaltverformung, wie z.B. durch Tiefziehen mittels Stempel und Matrize, aus dem Laminat 10 herausgeformt sind.

Wie in den Fig. 5 und 6 dargestellt, wird nach dem Befüllen der Näpfe 72 zur Bildung einer Blisterpackung 80 je nach Bedarf eine durchdrückbare Deckfolie 30 oder eine peelbare Deckfolie 50 auf den Blister 70 aufgesiegelt.

## Patentansprüche

1. Kaltverformbares Laminat (10) für die Herstellung von Blistern (70) zur Verpackung von gegen Feuchte, Sauerstoff und Säure empfindlichen Produkten, mit einer Sperrschicht (16) als Barriere gegen Wasserdampf und Gase, einer auf einer ersten Seite der Sperrschicht (16) angeordneten Kunststoffschicht (12) als Aussenschicht und einer auf der zweiten Seite der Sperrschicht (16) angeordneten siegelfähigen Innenschicht (20, 21, 22),
**dadurch gekennzeichnet, dass**
auf der zweiten Seite der Sperrschicht (16) ein Feuchte, Sauerstoff und Säure absorbierendes Absorbermaterial (24) angeordnet ist.

2. Kaltverformbares Laminat (10) nach Anspruch 1, **dadurch gekennzeichnet, dass** die Innenschicht (20) Polyolefin mit wenigstens einem Oxid aus der Gruppe der Alkali- und Erdalkalimetalle als Absorbermaterial (24) enthält.

3. Kaltverformbares Laminat (10) nach Anspruch 2, **dadurch gekennzeichnet, dass** das Polyolefin der Innenschicht (20) Kalziumoxid (CaO) als Absorbermaterial (24) enthält.

4. Kaltverformbares Laminat (10) nach Anspruch 3, **dadurch gekennzeichnet, dass** das Polyolefin der Innenschicht (20) 0,5 bis 50 Gew.-% CaO, vorzugsweise 10 bis 30 Gew.-% CaO, als Absorbermaterial (24) enthält.

5. Kaltverformbares Laminat (10) nach einem der Ansprüche 1 bis 4, **dadurch gekennzeichnet, dass** das Polyolefin der Innenschicht (20) aus Polyethylen (PE), insbesondere aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP) besteht und/oder Bestandteile säuremodifizierter Polyolefine, wie lonomere, EAA oder PP-MSA, enthält.

6. Kaltverformbares Laminat (10) nach einem der Ansprüche 1 bis 5, **dadurch gekennzeichnet, dass** das Polyolefin der Innenschicht (20, 22) aus einer einzigen Schicht besteht.

7. Kaltverformbares Laminat (10) nach einem der Ansprüche 1 bis 5, **dadurch gekennzeichnet, dass** das Polyolefin der Innenschicht aus mehreren Schichten (20, 21, 22) besteht.

8. Kaltverformbares Laminat (10) nach Anspruch 7, **dadurch gekennzeichnet, dass** das Polyolefin der Innenschicht eine Coextrusionsschicht aus wenigstens zwei Schichten (20, 22) ist, wobei die äusserste, von der Sperrschicht (16) am weitesten entfernte Schicht (22) im wesentlichen kein Absorbermaterial (24) enthält.

9. Kaltverformbares Laminat (10) nach einem der Ansprüche 1 bis 8, **dadurch gekennzeichnet, dass** die Sperrschicht (16) eine Aluminiumfolie ist und auf der dem Polyolefin zugewandten Seite mit einem Haftvermittler (18), insbesondere mit einem wasser- oder lösemittelbasierten Primer, oder mit einem polymeren Haftvermittler beschichtet ist.

10. Kaltverformbares Laminat (10) nach Anspruch 9, **dadurch gekennzeichnet, dass** die Aussenschicht (12) ein mit der Aluminiumfolie (16) über eine Klebstoffschicht (14) verbundener Kunststofffilm (12) aus orientiertem Polyamid, orientiertem Polypropylen oder orientiertem Polyester ist.

11. Deckfolie (30, 50) für aus einem kaltverformbaren Laminat mit einer Sperrschicht (16) als Barriere gegen Wasserdampf und Gase, einer auf einer ersten Seite der Sperrschicht (16) angeordneten Kunststoffschicht (12) als Aussenschicht und einer auf der zweiten Seite der Sperrschicht (16) angeordneten siegelfähigen Innenschicht (20, 21, 22) hergestellte Blister (70) zur Verpackung von gegen Feuchte, Sauerstoff und Säure empfindlichen Produkten, mit einer Sperrschicht (34, 54) als Barriere gegen Wasserdampf und Gase und einer auf einer ersten Seite der Sperrschicht (34, 54) angeordneten siegelfähigen Innenschicht (32, 52),
**dadurch gekennzeichnet, dass**
auf der ersten Seite der Sperrschicht (34, 54) ein Feuchte, Sauerstoff und Säure absorbierendes Absorbermaterial (24) angeordnet ist.

12. Deckfolie (30, 50) nach Anspruch 11, **dadurch gekennzeichnet, dass** die Innenschicht (32, 52) Polyolefin mit wenigstens ein Oxid aus der Gruppe der Alkali- und Erdalkalimetalle als Absorbermaterial (24) enthält.

13. Deckfolie (30, 50) nach Anspruch 12, **dadurch gekennzeichnet, dass** das Polyolefin der Innenschicht (32,52) Kalziumoxid (CaO) als Absorbermaterial (24) enthält.

14. Deckfolie (30, 50) nach Anspruch 13, **dadurch gekennzeichnet, dass** das Polyolefin der Innenschicht (32, 52) 0,5 bis 50 Gew.-% CaO, vorzugsweise 10 bis 30 Gew.-% CaO, als Absorbermaterial (24) enthält.

15. Deckfolie (30, 50) nach einem der Ansprüche 11 bis 14, **dadurch gekennzeichnet, dass** das Polyolefin der Innenschicht (32, 52) aus Polyethylen (PE), insbesondere aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP) besteht und/oder Bestandteile säuremodifizierter Polyolefine, wie lonomere, EAA oder PP-MSA, enthält.

16. Deckfolie (30, 50) nach einem der Ansprüche 11 bis 15, **dadurch gekennzeichnet, dass** die Innenschicht (32, 52) aus einer einzigen Schicht besteht.

17. Deckfolie (30, 50) nach einem der Ansprüche 11 bis 16, **dadurch gekennzeichnet, dass** die siegelfähige Innenschicht (32, 52) ein Siegelmedium in der Form eines Lackes, insbesondere eines Heisssiegellackes, einer Folie oder einer siegelfähigen Beschichtung umfasst und zur Siegelung der Deckfolie (30, 50) gegen die Innenseite des Blisters (70) dient, wobei die Siegelung eine Festversiegelung oder eine Siegelung mit geringerer Haftkraft zur Bildung einer peelbaren Öffnung sein kann.

18. Deckfolie (30, 50) nach einem der Ansprüche 11 bis 17, **dadurch gekennzeichnet, dass** die Sperrschicht (34, 54) eine Aluminiumfolie ist.

19. Blister (70) zur Verpackung von gegen Feuchte, Sauerstoff und Säure empfindlichen Produkten, hergestellt aus einem kaltverformbaren Laminat (10) nach einem der Ansprüche 1 bis 10.

20. Blisterpackung (80) zur Verpackung von gegen Feuchte, Sauerstoff und Säure empfindlichen Produkten, mit einem Blister (70) hergestellt aus einem kaltverformbaren Laminat (10) nach einem der Ansprüche 1 bis 10 und einer gegen die Innenschicht (20, 21, 22) des Laminates (10) gegen die Innenseite des Blisters (70) gesiegelten Deckfolie (30, 50) nach einem der Ansprüche 11 bis 18.

21. Verwendung einer Blisterpackung (80) nach Anspruch 20 zum Verpacken von pharmazeutischen Produkten, wie feuchteempfindlichen Tabletten und Pulvern.
